**Europäisches Patentamt**

**European Patent Office**

**Office européen des brevets**

(11) Veröffentlichungsnummer: **0 399 997**
**A2**

(12) **EUROPÄISCHE PATENTANMELDUNG**

(21) Anmeldenummer: **90890162.2**

(22) Anmeldetag: **23.05.90**

(30) Priorität: **23.05.89 AT 1237/89**

(43) Veröffentlichungstag der Anmeldung:
**28.11.90 Patentblatt 90/48**

(84) Benannte Vertragsstaaten:
**AT BE CH DE ES GB IT LI**

(51) Int. Cl.⁵: **H04M 19/02**

(71) Anmelder: **Siemens Aktiengesellschaft Österreich**
**Siemensstrasse 88 - 92**
**A-1210 Wien(AT)**

(72) Erfinder: **Naiwirt, Erich**
**Bussardgasse 9**
**A-1210 Wien(AT)**

(54) **Speiseschaltung für Rufwechselspannungen.**

(57) Schaltung zur Einspeisung von Rufwechselspannungen in Fernsprech-Teilnehmerschaltungen, insbesondere für Rufwechselspannungen, deren Amplituden wesentlich größer sind als die Amplituden der überlagerten Teilnehmer-Speisespannungen, wobei die Teilnehmerschleife vom Strom zweier gegensinnig gesteuerter, zwei- oder mehrstufiger Speiseverstärker gespeist ist. Die Rufwechselspannung wird über einen Optokoppler (OK), vorzugsweise Optotriac sowie über eine Schaltstrecke (T) der Endstufen (Ea) der Speiseverstärker (Va) in die Teilnehmerschleife (A,B) eingespeist, wodurch sich eine galvanische Trennung der mit höheren Rufwechselspannungen belasteten Rufstrom-Schaltstrecke von der empfindlichen Steuerschaltung ergibt. Der Endstufe (Ea) mindestens eines Speiseverstärkers (Va) ist ein Schutzwiderstand (SW) vorgeschalter.

FIG. 2

Die Erfindung betrifft eine Schaltung zur Einspeisung von Rufwechselspannungen in Fernsprech-Teilnehmerschaltungen, insbesondere für Rufwechselspannungen, deren Amplituden wesentlich größer sind als die Amplituden der überlagerten Teilnehmer-Speisespannungen wobei die Teilnehmerschleife vom Strom zweier gegensinnig gesteuerter, zwei- oder mehrstufiger Speiseverstärker gespeist ist.

Zur Einspeisung der Rufwechselspannung in die Teilnehmerschleife eines Fernsprech-Teilnehmers werden verschiedene Methoden angewendet. Eine dieser Methoden beruht auf einer Modulation der Speisespannung, bei der jedoch die von den Postverwaltungen gestellten Anforderungen hinsichtlich Amplitude und Klirrfaktor bei einem vertretbaren Aufwand nicht erfüllt werden können.

In der herkömmlichen Telefonietechnik wird der Rufwechselstrom über zwei Umschaltekontakte in die Teilnehmerschleife eingespeist, nachdem der Verbindungsaufbau zwischen Vermittlung und gewählter Teilnehmerstelle hergestellt ist; hierbei muß die Speisespannung der Teilnehmerschleife stets, also auch während des Anliegens der Rufwechselspannung angeschaltet sein, um das Melden des Teilnehmers durch Schleifenschluß auch während eines Rufes erkennen zu können. Der übliche Aufbau der Fernsprechstationen bedingt, daß die Amplitude der Rufwechselspannung wesentlich größer sein muß als die Größe der Speise-Gleichspannung. Bei Fernsprechstationen mit elektronischen Bauteilen ergibt sich demnach eine Gefährdung durch Überspannungen.

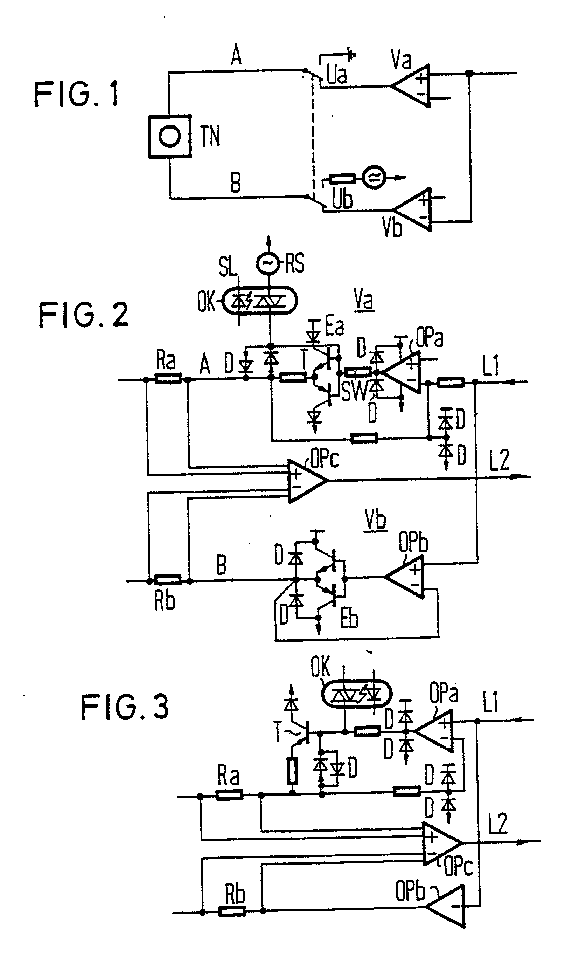

Eine Rufeinspeisung in herkömmlicher Schalttechnik ist in Fig. 1 dargestellt. Die Fernsprech-Teilnehmerstelle TN ist über die angeschlossenen Sprechadern A,B mit den Wurzeln zweier Umschaltekontakte Ua, Ub verbunden, die in der gezeichneten Stellung die Verbindungen zu den Ausgängen zweier gegensinnig angesteuerter Speiseverstärker Va, Vb herstellen. Während eines Rufes werden die gleichzeitig gesteuerten Umschaltekontakte Ua, Ub intermittierend umgelegt und legen in dieser Lage die Teilnehmerstelle TN in den Kreis einer Rufstromquelle RS. Eine solche Schaltung läßt sich aber in elektronischer Ausführung nicht mit so einfachen Mitteln realisieren, da es keine elektronischen umschaltekontakte gibt. Eine entsprechende Umschaltefunktion läßt sich nur mit Hilfe zweier getrennter elektronischer Schalter erzielen, die auch getrennt angesteuert werden müßten, was den Schaltungsaufwand wesentlich erhöhen würde.

Die Erfindung hat sich daher die Aufgabe gestellt, für Fernsprech-Teilnehmerschaltungen, die mit elektronischen Bauteilen ausgestattet sind, eine Rufeinspeisung zu ermöglichen, die einerseits ohne Mehraufwand die Umschaltung zur Rufwechselspannung ermöglicht und andererseits eine Gefährdung der elektronischen Bauteile durch die Rufwechselspannung vermeidet. Erfindungsgemäß wird dies dadurch erzielt, daß die Rufwechselspannung über einen Optokoppler, vorzugsweise Optotriac sowie über eine Schaltstrecke der Endstufen der Speiseverstärker in die Teilnehmerschleife eingespeist ist. Vorzugsweise ist der Endstufe mindestens eines Speiseverstärkers ein Schutzwiderstand vorgeschaltet.

Durch die Verwendung eines Optokopplers ergibt sich eine galvanische Trennung der mit höheren Rufwechselspannungen belasteten Rufstrom-Schaltstrecke von der wesentlich empfindlicheren Steuerstrecke. Dadurch ergibt sich eine Entflechtung der Potentialverteilungen im gesamten Netzwerk der einzelnen Teilnehmerschaltungen, die einen vereinfachten Aufbau der Schaltung ermöglicht, indem die Schaltstrecke der Endstufen der Speiseverstärker für die Rufstromeinspeisung verwendet wird.

Ausführungsbeispiele der Erfindung sind in den Fig. 2 und 3 der Zeichnung dargestellt.

Bei der Ausführung nach Fig. 2 sind die Speiseverstärker Va und Vb zweistufig ausgeführt und zwar mit je einem als Eingangsstufe dienenden Operationsverstärker OPa bzw. OPb und mit je einer als Gegentaktverstärker ausgebildeten Endstufe Ea bzw. Eb. Der Operationsverstärker OPb wird von dem über die Leitung L1 ankommenden Signal über den nichtinvertierenden Eingang angesteuert, während der Operationsverstärker OPa über den invertierenden Eingang gegensinnig betrieben wird. Die Endstufen Ea und Eb der beiden Speiseverstärker Va und Vb sind mit komplementären Transistoren ausgestattet und wirken als Stromquellen zur Speisung der Teilnehmerschleife, die in Fig. 2 nur durch die Sprechadern A und B symbolisiert ist. In den Sprechadern A und B ist je ein Widerstand Ra bzw. Rb eingeschaltet. Die an den Enden der Widerstände Ra und Rb abgegriffenen Spannungen werden einem dritten Operationsverstärker OPC in dem Sinne zugeführt, daß dieser ein Signal liefert, das der Summe der durch die Sprechadern A, B fließenden Ströme entspricht Das Sprechsignal des Teilnehmers wird vom Ausgang des Operationsverstärkers OPc über die Leitung L2 weitergeleitet. Auf diesem Wege werden auch Gleichstromsignale vom Teilnehmer an die nachfolgenden Vermittlungseinrichtungen weitergegeben.

Mit OK ist ein Optokoppler bezeichnet, der zur Einspeisung des Rufstromes in die Teilnehmerschleife A, B dient. Dieser wird von der Steuerung über eine Steuerleitung SL im Rhythmus des Rufsignales angesteuert, welches von der Rufstromquelle RS geliefert und von dem im Optokoppler OK enthaltenen Optotriac an die Basis des in der Endstufe Ea des Speiseverstärkers Va enthaltenen Transistors T geschaltet wird. Somit wird das Rufsignal über die Endstufe Ea in die Teilnehmerschleife A, B eingespeist. Mit D sind allgemein Schutzdioden bezeichnet, die das Auftreten von Überspannungen und die Beschädigung von elektronischen Bauteilen verhindern.

Zum speziellen Schutz des Operationsverstärkers OPa ist zwischen dessen Ausgang und der Basis des Transistors T ein Schutzwiderstand SW eingeschaltet.

Bei der Ausführung nach Fig. 2 sind zufolge der Verwendung von Gegentaktverstärkern in den Endstufen Ea und Eb zwei gegensinnige Speisepolaritäten ermöglicht. Wenn hingegen in speziellen Fällen mit einer einzigen Polarität des Speisestromes das Auslangen gefunden wird, kann die Schaltung, so wie in Fig. 3 dargestellt, vereinfacht werden. Hier ist die Endstufe Ea des Speiseverstärkers Va durch einen einzigen Transistor T realisiert.

**Ansprüche**

1. Schaltung zur Einspeisung von Rufwechselspannungen in Fernsprech-Teilnehmerschaltungen, insbesondere für Rufwechselspannungen, deren Amplituden wesentlich größer sind als die Amplituden der überlagerten Teilnehmer-Speisespannungen, wobei die Teilnehmerschleife vom Strom zweier gegensinnig gesteuerter, zwei- oder mehrstufiger Speiseverstärker gespeist ist, **dadurchgekennzeichnet,** daß die Rufwechselspannung über einen Optokoppler (OK), vorzugsweise Optotriac sowie über eine Schaltstrecke (T) der Endstufen (Ea) der Speiseverstärker (Va) in die Teilnehmerschleife (A,B) eingespeist ist.

2. Schaltung nach Anspruch 1, **dadurch gekennzeichnet,** daß der Endstufe (Ea) mindestens eines Speiseverstärkers (Va) ein Schutzwiderstand (SW) vorgeschaltet ist.

EP 0 399 997 A2

FIG.1

FIG.2

FIG.3